# EUROPEAN PATENT APPLICATION

(11) **EP 4 723 441 A1**
(43) Date of publication of application: **08.04.2026**
(21) Application number: 24815908.9
(22) Date of filing: 31.05.2024
(51) Int. Cl.: H02K 7/106, H02K 7/00, H02K 7/114, B60T 13/74

(54) **MOTOR**

(30) Priority: 01.06.2023 KR 20230070964
(71) Applicant: LG INNOTEK CO. LTD, Gangseo-gu Seoul 07796 (KR)
(72) Inventor: LEE, Moon Jae, Seoul 07796 (KR); KIM, Hun Jung, Seoul 07796 (KR); PARK, Heok Jin, Seoul 07796 (KR); JUNG, Young Hwan, Seoul 07796 (KR)
(74) Representative: M. Zardi & Co S.A.
(86) International application number: PCT/KR2024/007472
(87) International publication number: WO 2024/248534

(57) **Abstract**

The present invention may provide a motor which includes a shaft, a rotor coupled to the shaft, a stator disposed to correspond to the rotor, and a locking part disposed along the shaft in an axial direction, wherein the locking part includes a stopper which is movable in the axial direction, and when a signal is applied to the locking part, the stopper is engaged with the shaft in a concave-convex manner to restrict rotation of the shaft.

## Description

### [Technical Field]

The present invention relates to a motor.

### [Background Art]

An electronic braking system of a vehicle is a system which brakes a vehicle through the operation of a motor and a speed reducer and has advantages of lighter weight, superior responsiveness, and less installation space restraint compared to a mechanical braking system. In addition, an electric parking brake of a vehicle is a device which automatically operates using an actuator according to an operation state of a vehicle even when a driver does not manually operate the vehicle.

Such an electric parking brake may be formed in a structure in which a shoe in a drum-in-hat (DIH) of a wheel extends due to tension generated by pulling a parking cable through rotation of a motor to secure a braking force or a spindle moves a piston forward through rotation of a motor to bring a disk and a pad into close contact with each other to secure a braking force.

Since the structure of the electric parking brake should be added to the electronic braking system in order to implement an electric parking brake function, there are problems that a large installation space is required, and a structure of related parts such as a speed reducer is complicated.

### [Detailed Description of Invention]

### [Technical Problem]

Therefore, the present invention is to solve the above-described problems and is directed to providing a motor through which a parking brake function is added to an electronic braking system to simplify the structure of an entire braking system.

Objectives to be achieved by the present invention are not limited to the above-described objectives, and other objectives, which are not described above, may be clearly understood by those skilled in the art through the following specification.

### [Technical Solution]

An embodiment provides a motor which includes a shaft, a rotor coupled to the shaft, a stator disposed to correspond to the rotor, and a locking part disposed along the shaft in an axial direction, wherein the locking part includes a stopper which is movable in the axial direction, and when a signal is applied to the locking part, the stopper is engaged with the shaft in a concave-convex manner to restrict rotation of the shaft.

The shaft may include a first groove portion formed in the hollow, and the stopper may include a first protrusion having a shape corresponding to the first groove portion.

One side of the shaft may include a second protrusion, and the stopper may include a second groove portion having a shape corresponding to the second protrusion.

The shaft may include a first region and a second region connected to the first region, the second region may include the hollow, and the locking part may be located in the hollow.

The locking part may include a first cylinder disposed in the hollow and disposed outside the stopper, a first coil disposed in the first cylinder, and a first elastic member disposed between the stopper and an inner wall of the hollow, wherein the stopper may be linearly moved due to an electromagnetic force generated by the first coil.

When a current is applied to the first coil, the stopper may move to insert the first protrusion into the first groove portion to restrain rotation of the shaft.

An outer diameter of the second region may be greater than an outer diameter of the first region.

The second region may include a first wall and a second wall which form the hollow, the second wall may be formed perpendicular to the first wall to face the locking part in the axial direction, and the first groove portion may be formed in the second wall.

The first groove portion may be concavely formed in the second wall.

The first groove portion may include a first contact surface and a second contact surface which come into contact with the first protrusion, the first contact surface and the second contact surface may be disposed to face each other, and the first protrusion may be positioned between the first contact surface and the second contact surface to restrain rotation of the shaft.

The plurality of first contact surfaces and the plurality of second contact surfaces may form a cross shape.

The first contact surface and the second contact surface may be disposed to be inclined toward each other such that a separation distance therebetween increases toward an entrance of the first groove portion.

The first protrusion may include a third contact surface and a fourth contact surface disposed to be inclined toward each other, and the third contact surface may come into contact with the first contact surface of the first groove and the fourth contact surface may come into contact with the second contact surface to restrain rotation of the shaft.

The first protrusion may include a side surface disposed between the third contact surface and the fourth contact surface, and the side surface may be a curved surface.

The locking part may include a housing, a second cylinder disposed in the housing and disposed outside the stopper, a second coil disposed outside the stopper, and a second elastic member disposed between the second cylinder and an inner wall of the housing.

### [Advantageous Effects]

According to one embodiment of the present invention, since a parking brake function is added to an electronic braking system, there is an advantage of simplifying the structure of an entire braking system.

According to one embodiment of the present invention, since a shaft of a motor of an electronic braking system is directly restrained and therefore a separate component of a parking brake is not required, there are advantages of reducing an installation space and the number of parts.

According to one embodiment of the present invention, since a stopper is disposed to overlap a shaft in an axial direction, there is an advantage of minimizing the size of a structure for implementing a parking brake function.

### [Description of Drawings]

FIG. 1 is a view illustrating a motor according to an embodiment.
FIG. 2 is an exploded view illustrating the motor illustrated in FIG. 1.
FIG. 3 is a perspective view illustrating a shaft.
FIG. 4 is a view illustrating the shaft supported by bearings.
FIG. 5 is a partial cross-sectional view illustrating a first groove portion of the shaft.
FIG. 6 is a view illustrating the first groove portion.
FIG. 7 is an exploded view illustrating a locking part.
FIG. 8 is a side view illustrating a stopper.
FIG. 9 is a plan view illustrating the stopper.
FIG. 10 is a bottom perspective view illustrating a housing.
FIG. 11 is a side cross-sectional view illustrating the locking part.
FIG. 12 is a side cross-sectional view illustrating the shaft restrained by the stopper when power is applied to the locking part.
FIG. 13 is a plan view illustrating a first protrusion coupled to the first groove portion.
FIG. 14 is a view illustrating a motor according to another embodiment.
FIG. 15 is an exploded view illustrating the motor illustrated in FIG. 14.
FIG. 16 is an exploded view illustrating a locking part illustrated in FIG. 14.
FIG. 17 is an enlarged view illustrating the locking part illustrated in FIG. 14.
FIG. 18 is a view illustrating a shaft and the locking part.
FIG. 19 is a view illustrating a first part and a second cylinder of a stopper.
FIG. 20 shows views illustrating a state in which the stopper which is moving when a current is applied to the locking part.
FIG. 21 is a view illustrating the shaft restrained by the locking part.
FIG. 22 is a view illustrating the locking part and a housing.

### [Modes of the Invention]

Hereinafter, exemplary embodiments of the present invention will be described in detail with reference to the accompanying drawings.

However, the technical spirit of the present invention is not limited to the few embodiments which will be described and may be implemented in a variety of different forms, and one or more components of the embodiments may be selectively combined, substituted, and used within the range of the technical spirit of the present invention.

In addition, unless clearly and specifically defined otherwise by the context, all terms (including technical and scientific terms) used herein can be interpreted as having meanings customarily understood by those skilled in the art, and the meanings of generally used terms, such as those defined in commonly used dictionaries, will be interpreted in consideration of contextual meanings of the related art.

In addition, the terms used in the embodiments of the present invention are considered in a descriptive sense only and not to limit the present invention.

In the present specification, unless specifically indicated otherwise by the context, singular forms include plural forms, and in a case in which "at least one (or one or more) among A, B, and C" is described, this may include at least one combination among all possible combinations of A, B, and C.

In addition, in descriptions of components of the present invention, terms such as "first," "second," "A," "B," "(a)," and "(b)" may be used.

The terms are only to distinguish one component from another component, and the essence, order, and the like of the components are not limited by the terms.

In addition, it should be understood that, when a first component is referred to as being "connected," "coupled," or "linked" to a second component, such a description may include both a case in which the first component is directly connected, coupled, or linked to the second component, and a case in which the first component is connected, coupled, or linked to the second component with a third component disposed therebetween.

In addition, when a first component is described as being formed or disposed "on (above)" or "under (below)" a second component, such a description includes both a case in which the two components are formed or disposed in direct contact with each other and a case in which one or more other components are interposed between the two components. In addition, when a first component is described as being formed "on (above) or under (below)" a second component, such a description may include a case in which the first component is formed at an upper side or a lower side with respect to the second component.

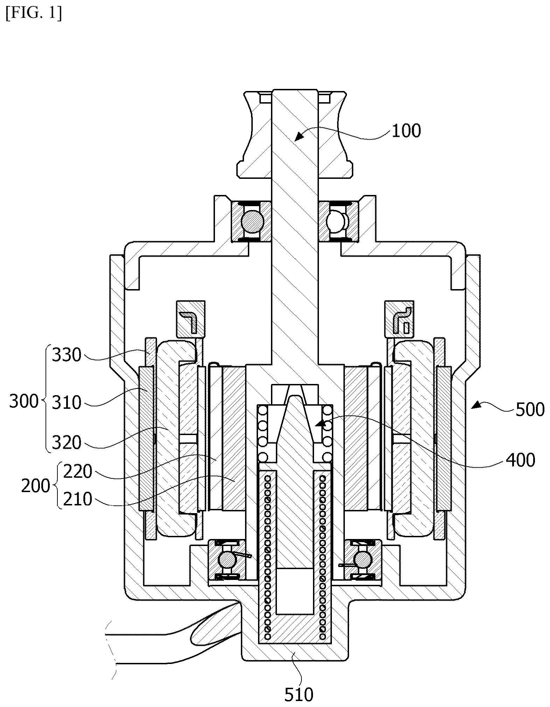

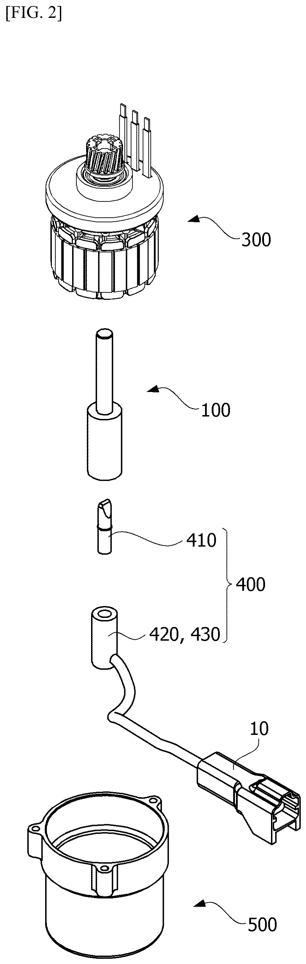

FIG. 1 is a view illustrating a motor according to an embodiment, and FIG. 2 is an exploded view illustrating the motor illustrated in FIG. 1.

Referring to FIGS. 1 and 2, the motor according to the embodiment may include a shaft 100, a rotor 200, a stator 300, a locking part 400, and a housing 500.

Hereinafter, the motor has a feature of a parking brake function in addition to a brake function of a vehicle.

Both ends of the shaft 100 may be rotatably supported by bearings in an axial direction. In the shaft 100, portions of which outer diameters are different from each other may be separately disposed in the axial direction.

The rotor 200 rotates through an electrical interaction with the stator 300. The rotor 200 may be disposed inside the stator 300 to correspond to the stator 300. The rotor 200 may include a rotor core 210 and a magnet 220.

The stator 300 is disposed outside the rotor 200. The stator 300 may include a stator core 310, an insulator 320, and a coil 330. The insulator 320 is mounted on the stator core 310. The coil 330 may be wound around the insulator 320. The insulator 320 is disposed between the coil 330 and the stator core 310 and electrically insulates the stator core 310 from the coil 330. The coil 330 induces an electromagnetic interaction with the magnet 220 of the rotor 200.

The locking part 400 is disposed in the shaft 100. The locking part 400 is a part which serves a parking brake function by restraining the shaft 100 from rotating when the vehicle is stopped and a signal is applied to the locking part 400. The locking part 400 is connected to a connector 10.

The housing 500 is disposed outside the stator 300.

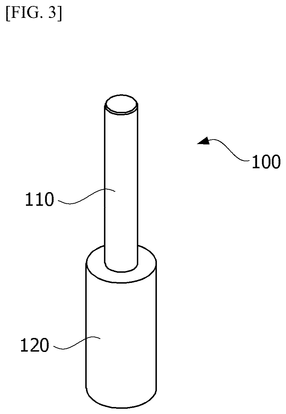

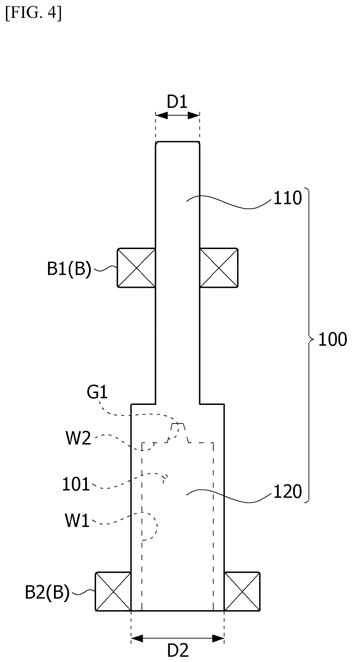

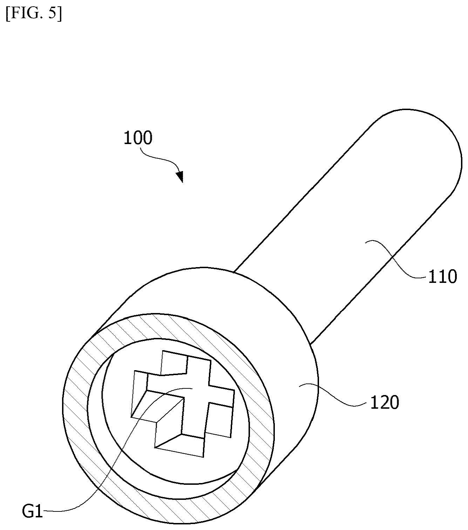

FIG. 3 is a perspective view illustrating the shaft 100, FIG. 4 is a view illustrating the shaft 100 supported by bearings B, and FIG. 5 is a partial cross-sectional view illustrating a first groove portion G1 of the shaft 100.

Referring to FIGS. 3 to 5, the shaft 100 may be divided into a first region 110 and a second region 120 in a lateral direction.

An outer diameter D2 of the second region 120 may be greater than an outer diameter D1 of the first region 110. The second region 120 may include a hollow 101 therein. The hollow 101 is formed in the axial direction. One end of the second region 120 is open due to the hollow 101. The locking part 400 (see FIG. 2) is positioned in the hollow 101. A portion of the second region 120 may be disposed to overlap the rotor 200 and the stator 300 in a radial direction.

The first region 110 may be rotatably supported by a first bearing B1. The second region 120 may be rotatably supported by a second bearing B2. An inner diameter of the second bearing B2 may be greater than an inner diameter of the first bearing B1.

The second region 120 may include a first wall W1 and a second wall W2 which form the hollow 101. The first wall W1 is disposed in the axial direction to face the locking part 400 in the radial direction. The second wall W2 is disposed to be perpendicular to the first wall W1 toward the locking part 400 in the axial direction.

Meanwhile, the second region 120 includes a first groove portion G1. The first groove portion G1 is formed to be concave from the second wall W2. The first groove portion G1 is to be coupled to a stopper 410 of the locking part 400.

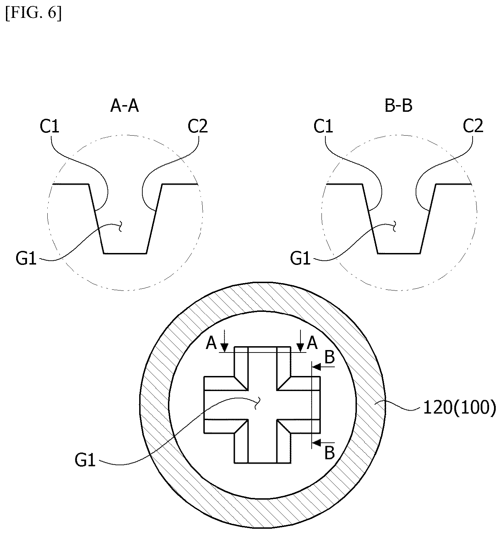

FIG. 6 is a view illustrating the first groove portion G1.

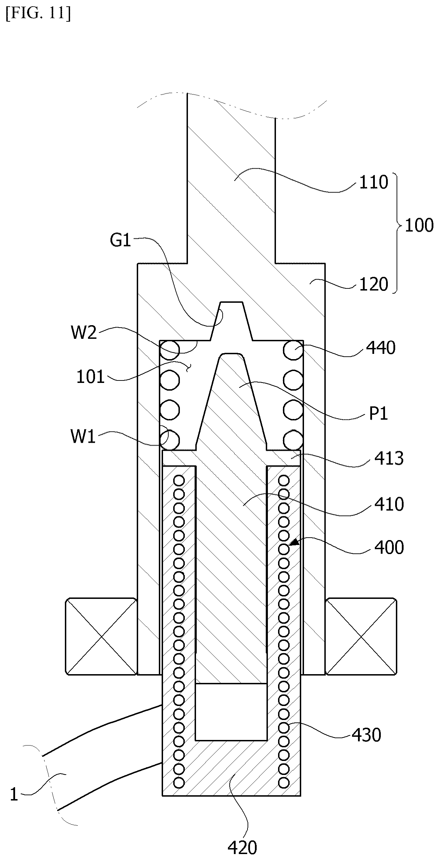

Referring to FIGS. 5 and 6, the first groove portion G1 may have a shape corresponding to a first protrusion P1 (see FIG. 11) of the stopper 410 to be engaged with the first protrusion P1 such that the first groove portion G1 and the first protrusion P1 restrain each other in a rotation direction of the shaft 100. For example, the first groove portion G1 may have a cross shape in the axial direction. The first groove portion G1 may be located in a central portion of the second wall W2.

The first groove portion G1 may include a first contact surface C1 and a second contact surface C2 which come into contact with the first protrusion P1. The first contact surface C1 and the second contact surface C2 are disposed to face each other. The first protrusion P1 is positioned between the first contact surface C1 and the second contact surface C2. The first contact surface C1 and the second contact surface C2 may be disposed to be inclined toward each other such that a separation distance therebetween increases toward an entrance of the first groove portion G1.

The first groove portion G1 may be disposed to overlap the rotor 200 in the radial direction. In addition, the first groove portion G1 may be disposed to overlap the stator 300 in the radial direction.

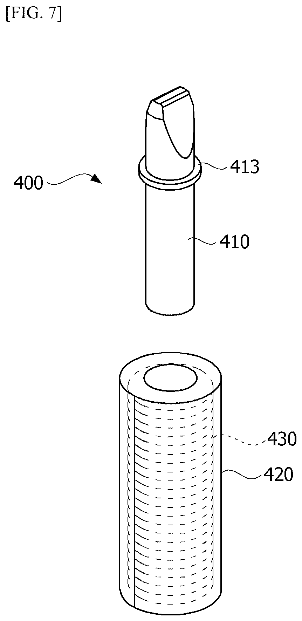

FIG. 7 is an exploded view illustrating the locking part 400.

Referring to FIG. 7, the locking part 400 may include the stopper 410, a first cylinder 420, and a first coil 430. The stopper 410 is disposed inside the first cylinder 420. The first cylinder 420 may be a cylindrical member in which a hollow is formed. The first coil 430 may be disposed in the first cylinder 420. The stopper 410 is disposed in the hollow of the first cylinder 420 and linearly reciprocates. In the stopper 410, a contact region with the shaft 100 is formed such that the stopper 410 moves in the axial direction to prevent the shaft 100 from rotating.

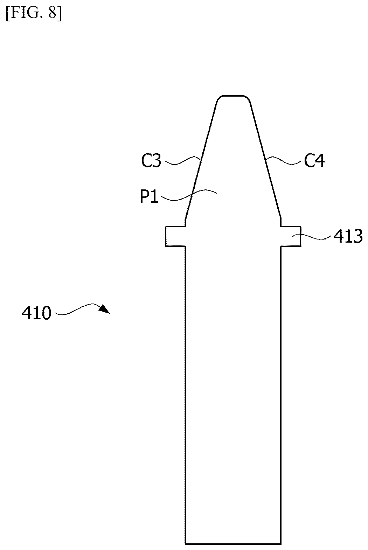

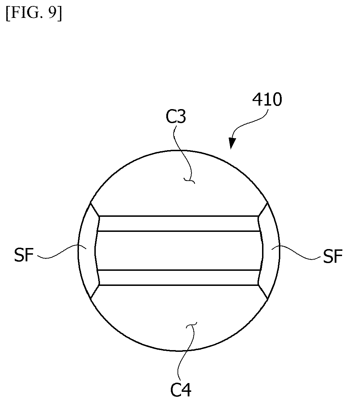

FIG. 8 is a side view illustrating the stopper 410, and FIG. 9 is a plan view illustrating the stopper 410.

Referring to FIGS. 8 and 9, the stopper 410 includes the first protrusion P1 at a front end thereof. In the first protrusion P1, a contact region with the shaft 100 is formed such that the first protrusion P1 is inserted into the first groove G1 of the shaft 100 to prevent the shaft 100 from rotating.

The first protrusion P1 may include a third contact surface C3 and a fourth contact surface C4. The third contact surface C3 may come into contact with the first contact surface C1 of the first groove G1. The fourth contact surface C4 may come into contact with the second contact surface C2. The third contact surface C3 and the fourth contact surface C4 may be disposed to be inclined. An inclination direction of the third contact surface C3 may be different from an inclination direction of the fourth contact surface C4.

In addition, the first protrusion P1 may include side surfaces SF disposed between the third contact surface C3 and the fourth contact surface C4. The side surfaces SF may be curved surfaces. In addition, the stopper 410 may include a flange 413. The flange 413 is a flange on which a first elastic member 440 (see FIG. 11) is seated.

The first protrusion P1 of the stopper 410 may be formed in a straight shape in a longitudinal shape of the stopper 410.

The stopper 410 may be formed in a metal material.

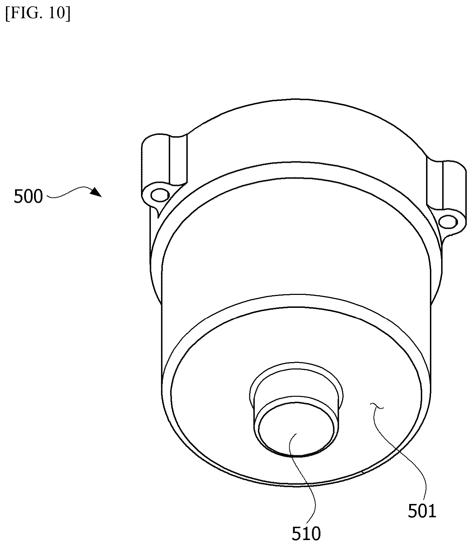

FIG. 10 is a bottom perspective view illustrating the housing 500.

Referring to FIG. 10, the housing 500 may include an accommodation part 510 which accommodates the locking part 400. The accommodation part 510 may protrude from a lower surface 501 of the housing 500 and secure a space in which the locking part 400 is accommodated. The accommodation part 510 may be disposed on a central portion of the of the lower surface 501 of the housing 500.

FIG. 11 is a side cross-sectional view illustrating the locking part 400.

Referring to FIG. 11, the locking part 400 may include the first elastic member 440. The first elastic member 440 is a member which is disposed between the stopper 410 and an inner wall of the hollow 101 of the shaft 100 and elongated and shortened to provide a restoring force in the axial direction.

When the vehicle is traveling or is stopped, or there is no additional signal, power is not applied to the first coil 430, and the first protrusion P1 of the stopper 410 is positioned to be spaced apart from the first groove portion G1 due to the restoring force of the first elastic member 440. The shaft 100 is not restrained by the stopper 410 and is rotated due to an electromagnetic interaction between the rotor 200 and the stator 300.

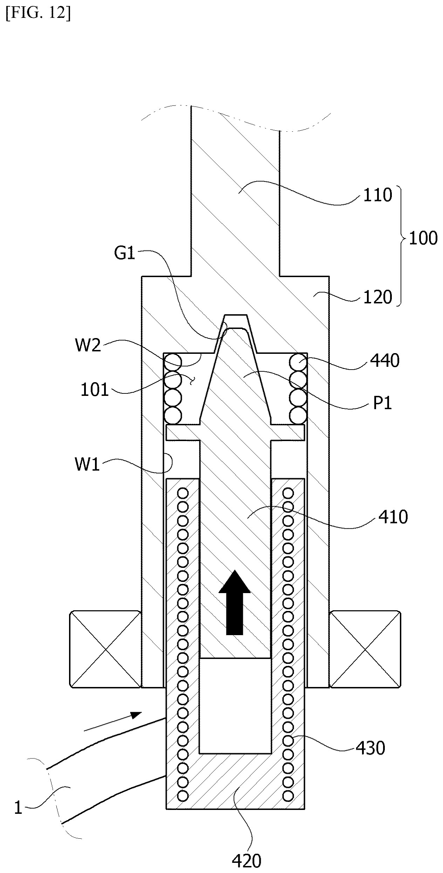

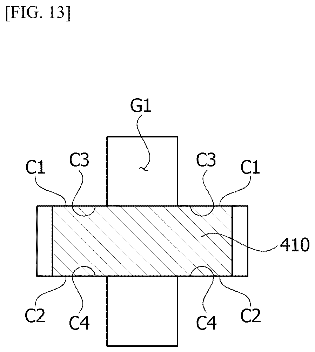

FIG. 12 is a side cross-sectional view illustrating the shaft 100 restrained by the stopper 410 when power is applied to the locking part 400, and FIG. 13 is a plan view illustrating the first protrusion P1 coupled to the first groove portion G1.

Referring to FIGS. 12 and 13, when the vehicle is parked, and a relating signal is input to a parking brake to apply power to the first coil 430, the stopper 410 is linearly moved along the first cylinder 420 due to an electromagnetic interaction between the first coil 430 and the stopper 410. The stopper 410 overcomes the restoring force of the first elastic member 440 and linearly moves toward the first groove portion G1. The stopper 410 may move until the first protrusion P1 of the stopper 410 is completely inserted into the first groove portion G1.

The first protrusion P1 formed in the straight shape is inserted into the first groove portion G1, and a contact region is formed between the shaft 100 and the stopper 410 to prevent the shaft 100 from moving. That is, the first contact surface C1 of the first groove G1 comes into contact with the third contact surface C3 of the first protrusion P1, the second contact surface C2 of the first groove G2 comes into contact with the fourth contact surface C4 of the first protrusion P1, and thus rotation of the shaft 100 is restrained by the stopper 410.

As described above, since the stopper 410 directly restrains the shaft 100, there is an advantage of serving a parking brake function without a structure in which a separate parking brake is formed.

The above-described embodiment is an exemplary embodiment in which the stopper 410 is moved due to the electromagnetic interaction between the first coil 430 and the stopper 410 and may have, for example, a solenoid structure. However, the present invention is not limited to the exemplary embodiment, and another structure in which a stopper 410 is reciprocally linearly moved, such as a structure in which the stopper 410 is moved due to shape deformation of a shape memory alloy or the like, may be applied thereto or modified thereas.

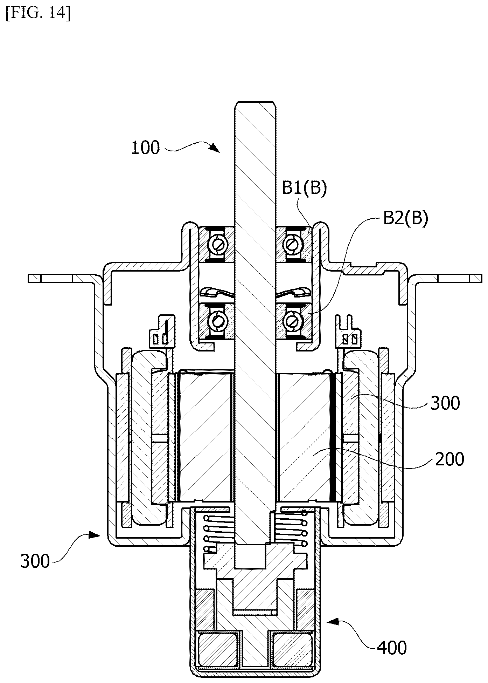

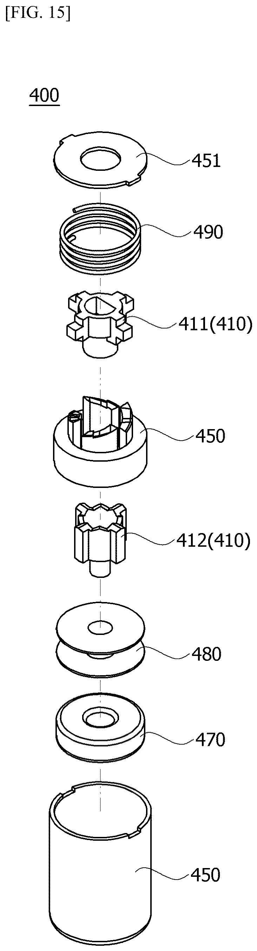

FIG. 14 is a view illustrating a motor according to another embodiment, and FIG. 15 is an exploded view illustrating the motor illustrated in FIG. 14.

Referring to FIGS. 14 and 15, in the motor according to another embodiment, a locking part 400 may be disposed at one side of a shaft 100 in an axial direction instead of an inner portion of the shaft 100. Since the locking part 400 is disposed at one side of the shaft 100, both a first bearing B1 and a second bearing B2 may be located at one side of the shaft 100.

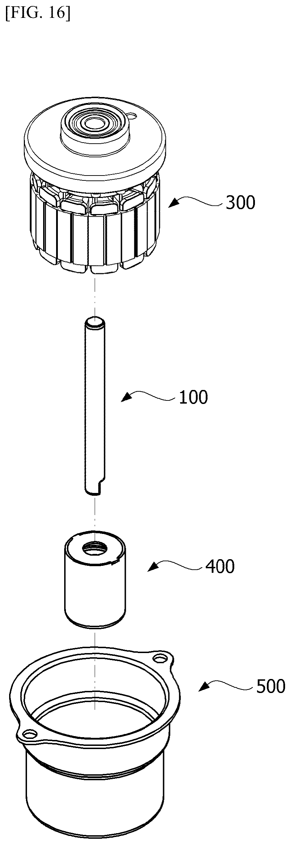

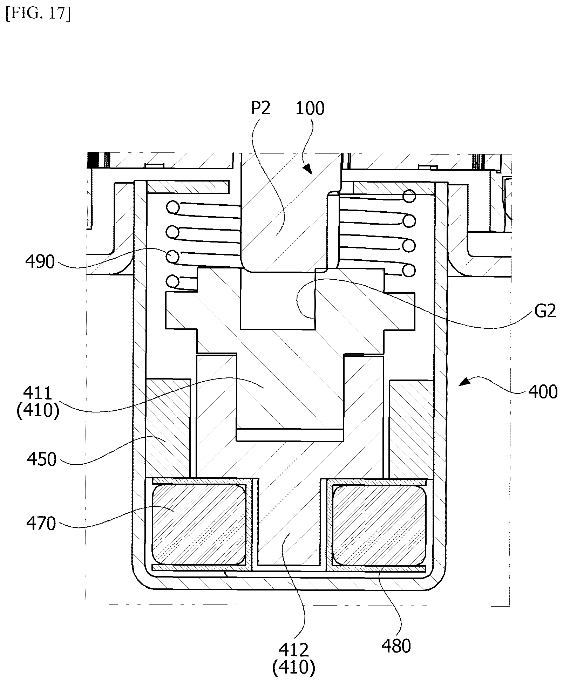

FIG. 16 is an exploded view illustrating the locking part 400 illustrated in FIG. 14, and FIG. 17 is an enlarged view illustrating the locking part 400 illustrated in FIG. 14.

Referring to FIGS. 16 and 17, the locking part 400 may include a stopper 410, a case 450, a second cylinder 450, a second coil 470, and a second elastic member 490.

The stopper 410 may include a first part 411 and a second part 412. The first part 411 is stacked on the second part 412 in the axial direction. When the second part 412 moves, the first part 411 also moves in conjunction with the movement of the second part 412. The first part 411 includes a second groove portion G2. The second part 412 electromagnetically interacts with the second coil 470 to linearly move along the inside of the second cylinder 450.

The case 450 may be a cylindrical member in which an accommodation space is formed. The case 450 may include a cover 451 which covers an open upper portion of the case 450.

The second cylinder 450 is disposed in the case 450.

The second coil 470 may be disposed in the case 450 and disposed at one side of the second cylinder 450. The second coil 470 may be coupled to a bobbin 480. The bobbin 480 is disposed at one side of the second cylinder 450. The second coil 470 is connected to an external connector.

The second elastic member 490 is disposed between an inner wall of the case 450 and the first part 411 in the axial direction. The second elastic member 490 may be a coil spring having a restoring force when elongated and shortened. The first part 411 remains pushed away from the shaft 100 due to the restoring force of the second elastic member 490.

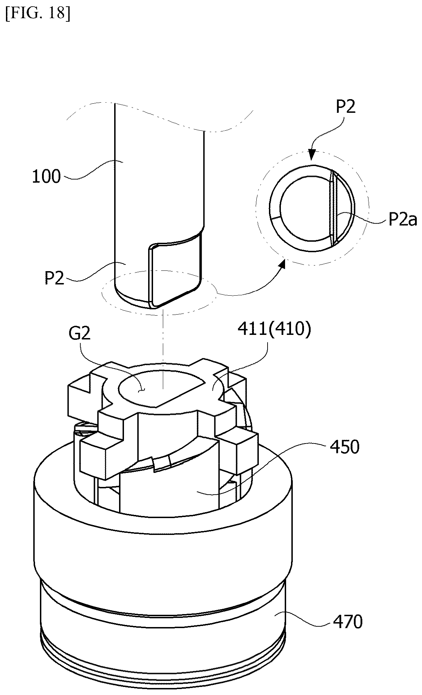

FIG. 18 is a view illustrating the shaft 100 and the locking part 400.

Referring to FIG. 18, the shaft 100 may include a second protrusion P2.

The stopper 410 of the locking part 400 may include the second groove portion G2. As the stopper 410 of the locking part 400 moves in the axial direction such that the second protrusion P2 is inserted into the second groove portion G2, the shaft 100 is restrained from rotating by the stopper 410.

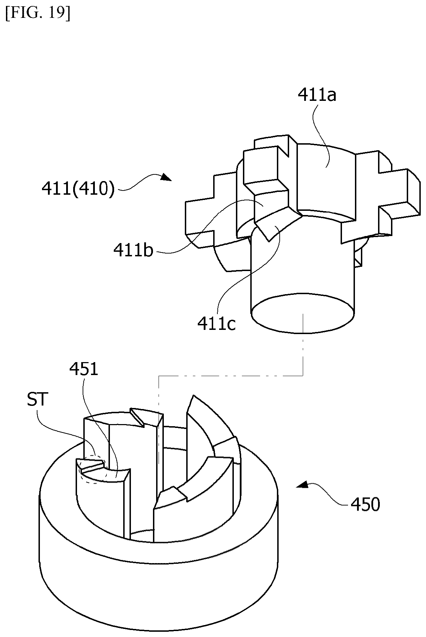

FIG. 19 is a view illustrating the first part 411 and the second cylinder 450 of the stopper 410.

Referring to FIG. 19, the first part 411 may include a cylindrical body 411a and a plurality of wing parts 411b protruding from an outer circumferential surface of the body 411a. The second elastic member 490 (see FIG. 17) is seated on one side surface of each of the wing parts 411b. The wing part 411b may include a first surface 411c. The first surface 411c may be disposed on the other side surface SF of the wing part 411b. The first surface 411c is a surface which comes into contact with a second surface 451 disposed on one side end of the second cylinder 450 or one side surface of the second part 412. The first surface 411c may be formed to be inclined.

The second cylinder 450 includes the second surface 451 at one side surface thereof. The second surface 451 may be disposed to be inclined to correspond to the first surface 411c and formed such that a step ST is formed.

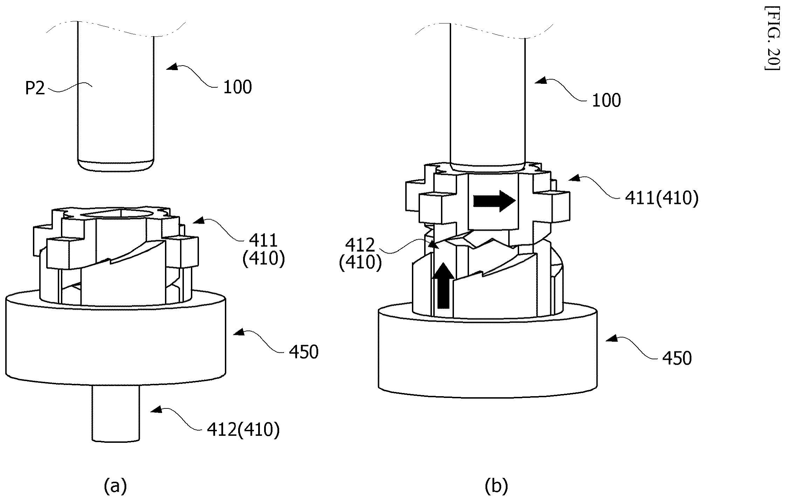

FIG. 20 shows views illustrating a state in which the stopper 410 which is moving when a current is applied to the locking part 400.

As illustrated in FIG. 20A, when a vehicle is traveling or is stopped, or there is no additional signal, power is not applied to the second coil 470, and the second protrusion P2 of the shaft 100 is positioned to be spaced apart from the second groove portion G2 due to a restoring force of the second elastic member 490. The shaft 100 is rotated due to an electromagnetic interaction between the rotor 200 and the stator 300 without being restrained by the stopper 410.

As illustrated in FIG. 20B, when the vehicle is parked, and a signal related to a parking brake is input to apply power to the second coil 470, the second part 412 of the stopper 410 is linearly moved along the second cylinder 450 due to an electromagnetic interaction between the second coil 470 and the stopper 410. The second part 412 of the stopper 410 overcomes the restoring force of the second elastic member 490 and linearly moves toward the shaft 100. When the second part 412 moves, in a state in which one side surface of the second part 412 is in contact with the first surface 411c of the first part 411, the first part 411 moves toward the shaft 100 by the second part 412. In this case, since a surface of the second part 412 in contact with the first surface 411c of the first part 411 is disposed to be inclined, the first part 411 rotates and moves toward the shaft 100. In addition, in a state in which the second groove portion G2 and the second protrusion P2 are aligned, the second protrusion P2 is inserted into the second groove portion G2.

In this case, the first surface 411c of the first part 411 and the step ST of the second cylinder 450 are aligned.

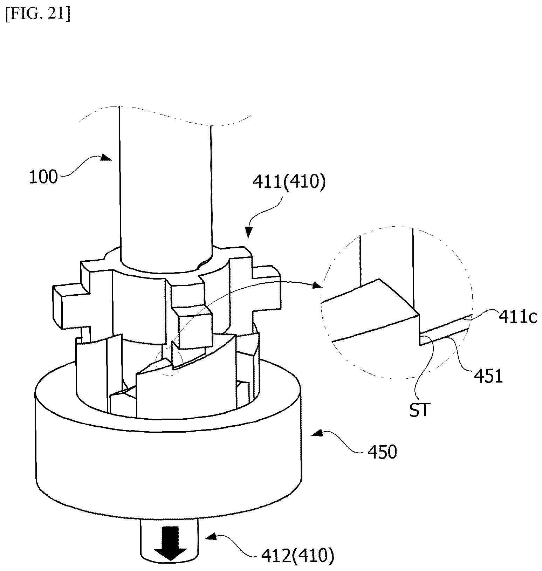

FIG. 21 is a view illustrating the shaft 100 restrained by the locking part 400.

Referring to FIG. 21, when a current applied to the second coil 470 is stopped, the second part 412 moves away from the shaft 100, the first part 411 moves, and the first surface 411c of the first part 411 is hooked on the step ST of the second cylinder 450. Accordingly, since the second cylinder 450 is fixed in a rotation direction, the first part 411 is fixed to the second cylinder 450 in the rotation direction. As a result, in a state in which the second protrusion P2 is inserted into the second groove, and thus the shaft 100 is restrained from rotating by the first part 411 to serve a parking brake function.

Since the first part 411 is hooked on the step ST even when the current supplied to the second coil 470 is stopped, there is an advantage that power does not need to be continuously supplied to the locking part 400 for serving a parking brake function.

When the current is applied to the second coil 470 again to release the restraint of the shaft 100, the stopper 410 of the second part 412 overcomes the restoring force of the second elastic member 490, moves toward the shaft 100, and lifts the first part 411 upward, and thus the first part 411 is spaced apart from the second cylinder 450. In this case, the first part 411 rotates such that the wing part 411b of the first part 411 is aligned with a gap of the second cylinder 450. In addition, when the current applied to the second coil 470 is stopped, the first part 411 is lowered, the second protrusion P2 is withdrawn from the second groove portion G2, and thus the stopper 410 is withdrawn from the shaft 100 to release the restraint of the shaft 100.

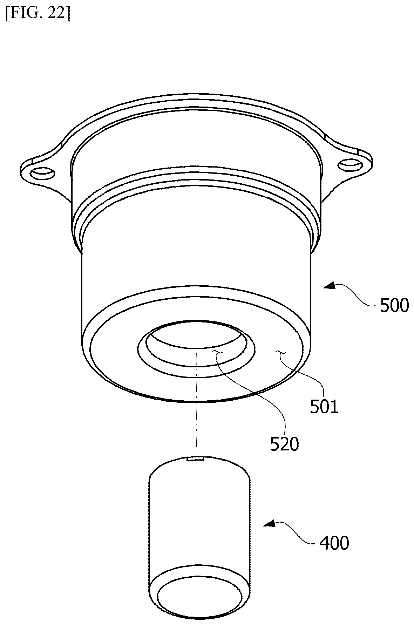

FIG. 22 is a view illustrating the locking part 400 and a housing 500.

Referring to FIG. 22, the housing 500 may include a hole 520 formed in a lower surface 501. The hole 520 may be disposed in a central portion of the housing 500. The locking part 400 may be press-fitted into the hole 520 to be fixed to the housing 500.

The above-described embodiment is an exemplary embodiment in which the stopper 410 is moved due to the electromagnetic interaction between the second coil 470 and the stopper 410 and may have, for example, a solenoid structure. However, the present invention is not limited to the exemplary embodiment, and another structure in which a stopper 410 is reciprocally linearly moved, such as a structure in which the stopper 410 is moved due to shape deformation of a shape memory alloy or the like, may be applied thereto or modified thereas.

The motor according to one exemplary embodiment of the present invention has been described above with reference to the accompanying drawings.

The above-described embodiments should be considered in a descriptive sense only and not for purposes of limitation, and the scope of the present invention is defined not by the detailed description but by the appended claims. In addition, it should be interpreted that the scope of the present invention encompasses all modifications and alterations derived from meanings and the scope and equivalents of the appended claims.

## Claims

1. A motor comprising:
a shaft;
a rotor coupled to the shaft;
a stator disposed to correspond to the rotor; and
a locking part disposed along the shaft in an axial direction,
wherein the locking part includes a stopper which is movable in the axial direction, and
when a signal is applied to the locking part, the stopper is engaged with the shaft in a concave-convex manner to restrict rotation of the shaft.

2. The motor of claim 1, wherein:
the shaft includes a first groove portion formed in the hollow; and
the stopper includes a first protrusion having a shape corresponding to the first groove portion.

3. The motor of claim 1, wherein:
one side of the shaft includes a second protrusion; and
the stopper includes a second groove portion having a shape corresponding to the second protrusion.

4. The motor of claim 2, wherein:
the shaft includes a first region and a second region connected to the first region;
the second region includes the hollow; and
the locking part is located in the hollow.

5. The motor of claim 4, wherein the locking part includes:
a first cylinder disposed in the hollow and disposed outside the stopper;
a first coil disposed in the first cylinder; and
a first elastic member disposed between the stopper and an inner wall of the hollow,
wherein the stopper is linearly moved due to an electromagnetic force generated by the first coil.

6. The motor of claim 5, wherein, when a current is applied to the first coil, the stopper moves to insert the first protrusion into the first groove portion to restrain rotation of the shaft.

7. The motor of claim 4, wherein an outer diameter of the second region is greater than an outer diameter of the first region.

8. The motor of claim 4, wherein the second region includes a first wall and a second wall which form the hollow, wherein the second wall is formed perpendicular to the first wall to face the locking part in the axial direction,
wherein the first groove portion is formed in the second wall.

9. The motor of claim 8, wherein the first groove portion is concavely formed in the second wall.

10. The motor of claim 8, wherein:
the first groove portion includes a first contact surface and a second contact surface which come into contact with the first protrusion;
the first contact surface and the second contact surface are disposed to face each other; and
the first protrusion is positioned between the first contact surface and the second contact surface to restrain rotation of the shaft.

11. The motor of claim 8, wherein the plurality of first contact surfaces and the plurality of second contact surfaces form a cross shape.

12. The motor of claim 8, wherein the first contact surface and the second contact surface are disposed to be inclined toward each other such that a separation distance therebetween increases toward an entrance of the first groove portion.

13. The motor of claim 10, wherein:
the first protrusion includes a third contact surface and a fourth contact surface disposed to be inclined toward each other; and
the third contact surface comes into contact with the first contact surface of the first groove and the fourth contact surface comes into contact with the second contact surface to restrain rotation of the shaft.

14. The motor of claim 13, wherein:
the first protrusion includes a side surface disposed between the third contact surface and the fourth contact surface; and
the side surface is a curved surface.

15. The motor of claim 3, wherein the locking part includes:
a housing;
a second cylinder disposed in the housing and disposed outside the stopper;
a second coil disposed outside the stopper; and
a second elastic member disposed between the second cylinder and an inner wall of the housing.
